# EUROPÄISCHE PATENTSCHRIFT

(11) **EP 0 669 490 B1**
(45) Veröffentlichungstag und Bekanntmachung des Hinweises auf die Patenterteilung: **24.03.1999**
(21) Anmeldenummer: 94110157.8
(22) Anmeldetag: 30.06.1994
(51) Int. Cl.: F16L 55/162, F28F 11/02

(54) **Verfahren zum Erzielen einer dichten Verbindung zwischen einem Rohr und einer Hülse**
Method for achieving a tight connection between a pipe and a sleeve
Procédé pour réaliser une liaison étanche entre un tuyau et un manchon

(30) Priorität: 25.02.1994 DE 4406167
(43) Veröffentlichungstag der Anmeldung: 30.08.1995
(73) Patentinhaber: ABB Reaktor GmbH, D-68167 Mannheim (DE)
(72) Erfinder: Russ, Jakob, D-67354 Römerberg (DE); Majumdar, Abdullah-El-Baqui, Dr., D-68165 Mannheim (DE)
(74) Vertreter: Rupprecht, Klaus, Dipl.-Ing.

(56) Entgegenhaltungen:
- EP-A- 0 214 670
- EP-A- 0 291 003
- EP-A- 0 462 530
- DD-A- 236 584
- US-A- 4 505 017
- US-E- R E30 802

## Beschreibung

Die Erfindung betrifft ein Verfahren zum Erzielen einer dichten Verbindung zwischen einem eine Leckagestelle aufweisenden metallischen Rohr und einer die Leckagestelle übergreifenden metallischen Hülse, wobei die Hülse mit einer Aufweittechnik an die Innenwand des Rohres angelegt wird.

Ein derartiges Verfahren ist aus der DE-PS 40 08 252 bekannt. Dort wird der nach erfolgter Aufweitung entstandene Rückfederungsspalt mit Hilfe eines der Umfangsfläche der Hülse zugeordneten Bauteiles aus einer Formgedächtnislegierung überbrückt. Dieses zusätzliche Bauteil aus einer Formgedächtnislegierung entfaltet seine Abdichtwirkung erst nach einer Wärmeeinwirkung. Unwägbarkeiten bei der Herstellung der Formgedächtnislegierung führen zu Unsicherheiten hinsichtlich der erzielbaren Dichtwirkung.

Es stellt sich die Aufgabe, ein Verfahren der eingangs genannten Art anzugeben, das eine leckagedichte Verbindung nach Beendigung des Aufweitvorganges sicherstellt und weder zusätzliche Bauteile noch eine Wärmeeinwirkung erforderlich macht.

Gelöst wird diese Aufgabe erfindungsgemäß durch die im Kennzeichen des Anspruchs 1 angegebenen Merkmale.

Durch Auswahl eines derartigen Hülsenwerkstoffes wird eine spaltfreie und somit dichte Verbindung erzielt, die ohne ein weiteres Bauteil und ohne zusätzliche Wärmebehandlung auskommt.

Es wird ein Hülsenwerkstoff gewählt, dessen Wärmeausdehnungskoeffizient gleich oder größer dem Wärmeausdehnungskoeffizient des Rohrwerkstoffes ist. Damit wird sichergestellt, daß die "negative Spaltbreite" bei jeder Einsatztemperatur des reparierten Rohres ihre Dichtwirkung erzielen kann.

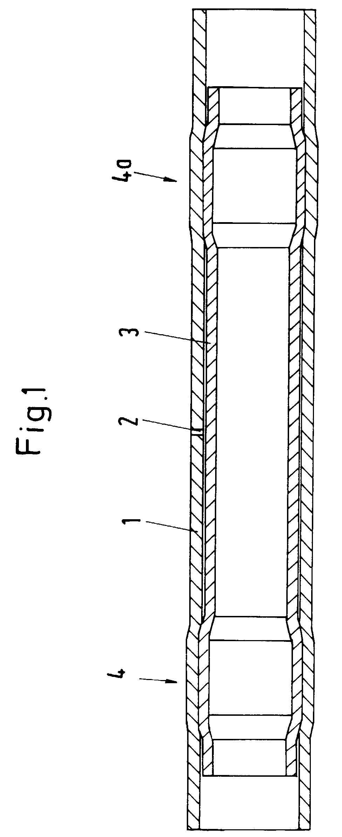

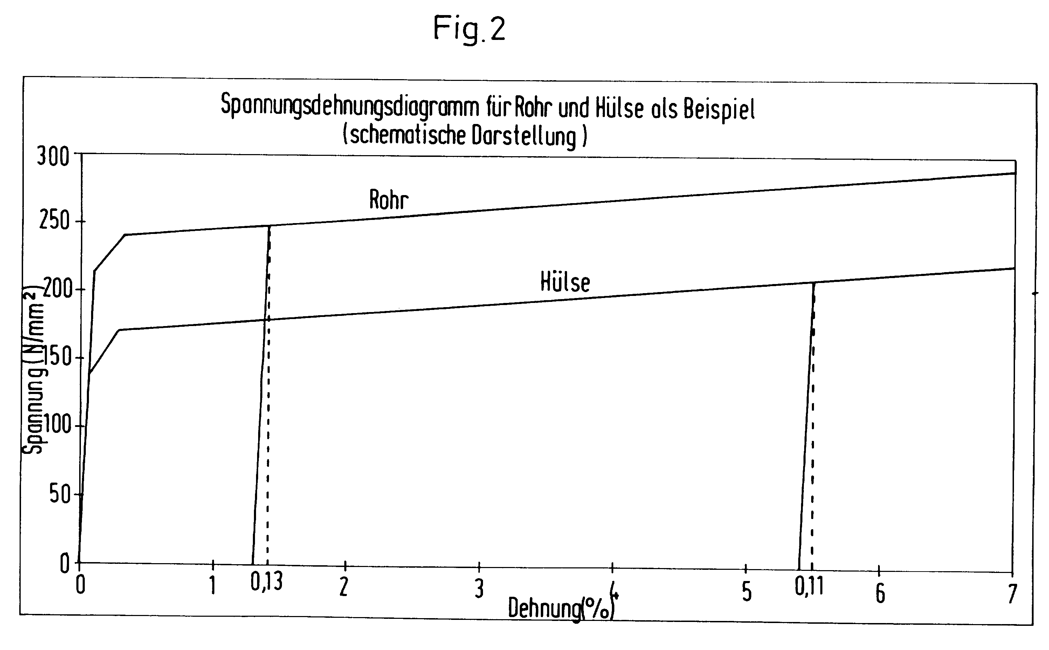

Anhand eines Ausführungsbeispieles und der schematischen Fig. 1 und 2 wird das erfindungsgemäße Verfahren beschrieben.

Dabei zeigt die
- Fig. 1: den Teilbereich eines Rohres mit einer Hülse und
- Fig. 2: ein Spannungs-/Dehnungsdiagramm für einen Rohr- und einen Hülsenwerkstoff.

Ein in der Fig. 1 dargestellter Abschnitt eines metallischen Rohres 1 weist eine Leckagestelle 2 auf, die von einer metallischen Hülse 3 übergriffen ist. Die Leckagestelle ist zwischen zwei Aufweitbereichen 4, 4a angeordnet. Eine aus der Zeichnung ersichtliche bleibende plastische Verformung der Aufweitbereiche ist erforderlich. Dabei entsteht eine dichte Verbindung, die erfindungsgemäß durch die Verwendung eines Hülsenwerkstoffes erzielt wird, der gegenüber dem Rohrwerkstoff, in einem Spannungsdehnungsdiagramm nachvollziehbare, geringere Festigkeitswerte aufweist. Hierzu wird auf die Fig. 2 verwiesen, aus der beispielsweise eine Spannungsdifferenz von 70 N/mm² zwischen der unteren, den Hülsenwerkstoff und der oberen, den Rohrwerkstoff symbolisierenden Kurve ersichtlich ist.

Ein zu reparierendes Rohr 1 ist beispielsweise mit einem Innendurchmesser von 16,87 mm versehen. Um ein problemloses Einführen der Hülse 3 zu ermöglichen, weist sie z.B. einen Außendurchmesser von 16,2 mm auf. Das Aufweiten führt zuerst zu einer Anlage der plastisch verformten Hülse an die Rohrinnenwand und bei dem ein vorgebbares Maß fortgeführtem Aufweitvorgang zu einer plastischen Verformung von Hülse und Rohr.

Weist bei der angegebenen Rohr-/Hülsenpaarung das Rohr aufgrund seiner Spannungswerte bei einem Rohrinnendurchmesser von 16,87 mm eine Rückfederung von 0,13% auf, so führt diese Rückfederung zu einer Innendurchmesser-Reduzierung um 0,0219 mm. Ist der Werkstoff der zugehörigen Hülse mit einem höheren Festigkeitswert und somit einer größeren Rückfederung von 0,14% ausgestattet, so führt das bei einem Außendurchmesser von 16,2 mm zu einer Außendurchmesser-Reduzierung der Hülse um 0,0227 mm. Der Außendurchmesser der Hülse federt in diesem Beispiel um 0,0008 mm = 0,8 µm mehr zurück, was zu einer Spaltbreite von 0,4 µm führt. Die Dichtheit ist daher nicht gegeben.

Weist dagegen gemäß den erfindungsgemäßen Maßnahmen die Festigkeit und damit auch die Rückfederung der Hülse gegenüber dem Rohr einen geringeren Wert auf, dann ergibt sich die nachfolgende an einem anderen Beispiel beschriebene Sachlage. Eine Rückfederung des Rohres von 0,13 % führt bei einem Außendurchmesser von 16,87 mm ebenso wie beim ersten Beispiel zu einer Änderung des Innendurchmessers um 0,0219 mm. Die Hülse weist dagegen bei einer Rückfederung von 0,11% und einem Außendurchmesser von 16,2 mm nur eine Durchmesseränderung von 0,0178 mm auf. Die Differenz von 0,004 mm (4,0 µm) führt zu einer radialen "negativen Spaltbreite" von 2,0 ym, das heißt 2,0 ym Interferenze an der Grenzfläche (Interface) zwischen Rohr und Hülse. Wegen der größeren Rückfederung des Rohres erfolgt somit eine dichtende Verbindung ohne Schweißen und ohne zusätzliche Bauteile.

Schematisch ist in der Fig. 2 die Rückfederung des Rohres von 0,13% bei einem plastischen Dehnungswert von ca. 1,3% und die Rückfederung der Hülse von 0,11% bei einem plastischen Dehnungswert von ca. 5,4% dargestellt. Der Unterschied im plastischen Dehnungswert ist darauf zurückzuführen, daß die innenliegende Hülse zwangsläufig mehr gedehnt wird als das Rohr. Wesentlich ist die Differenz zwischen den Spannungswerten von Hülse und Rohr, die auch bei steigender Dehnung (Figur 2), zumindest in dem gewählten Dehnungsbereich zwischen 1% und 6%, gleichbleibt. Die Dichtwirkung ist auch bei Temperatureinwirkung am Einsatzort des reparierten Rohres gewährleistet, da der Wärmeausdehnungskoeffizient der Hülse so gewählt ist, daß bei den zu erwartenden Temperaturverhältnissen die Dichtwirkung gesichert ist. Wird die Differenz der Spannungswerte noch größer gewählt als die aus der Figur 2 ersichtlichen 70 N/mm², vergrößert sich die Differenz der Rückfederungswerte und somit der Dichteffekt entsprechend.

Bei der schematischen Darstellung in Fig. 2 wurde der Einfachheit halber für Hülse und Rohr das gleiche E-Modul eingesetzt. Die erfindungsgemäße Wirkungsweise gilt natürlich auch für abweichende E-Module von Hülse und Rohr, solange die Rückfederung der Hülse kleiner ist als die des Rohres.

## Patentansprüche

1. Verfahren zum Erzielen einer dichten Verbindung zwischen einem eine Leckagestelle (2) aufweisenden metallischen Rohr (1) und einer die Leckagestelle übergreifenden metallischen Hülse (3), wobei die Hülse mit Hilfe einer Aufweittechnik an die Innenwand des Rohres angelegt wird, dadurch gekennzeichnet, daß ein Hülsenwerkstoff mit gegenüber dem Rohrwerkstoff derart geringeren Spannungswerten verwendet wird, daß nach einer in einem Dehnungsbereich von 1% bis 6% erfolgten Aufweitung das Rohr ein größeres Maß zurückfedert als die Hülse und eine Preßverbindung zwischen Hülse und Rohr erzielt wird.

2. Verfahren nach Anspruch 1, dadurch gekennzeichnet, daß ein Hülsenwerkstoff gewählt wird, dessen Wärmeausdehnungskoeffizient gleich oder größer dem Wärmeausdehnungskoeffizient des Rohrwerkstoffes ist.

## Claims

1. Method of obtaining a leakproof connection between a metallic tube (1), which has a leak (2), and a metallic sleeve (3) extending over the leak, said sleeve being applied against the inner wall of the tube by an expansion technique, characterized in that a sleeve material having stress values so much lower than the material of the tube that, after an expansion effected in an expansion range of 1% to 6%, the tube springs back to a greater extent than the sleeve, and a press connection between the sleeve and tube is obtained, is used.

2. Method according to Claim 1, characterized in that a sleeve material is selected whose coefficent of thermal expansion is equal to or higher than the coefficient of thermal expansion of the tube material.

## Revendications

1. Procédé pour réaliser une liaison étanche entre un tuyau métallique (1) présentant un emplacement de fuite (2) et un manchon métallique (3) recouvrant l'emplacement de fuite, le manchon étant appliqué par une technique d'expansion contre la paroi intérieure du tuyau, **caractérisé** par le fait qu'on utilise pour le manchon un matériau ayant des valeurs de contrainte plus faibles que le matériau du tuyau de telle manière qu'après une expansion réalisée dans une plage d'allongement des matériaux de 1 % à 6 %, le tuyau subit un retour élastique plus important que le manchon et qu'il s'établisse une liaison à serrage entre le manchon et le tuyau.

2. Procédé suivant la revendication 1, **caractérisé** par le fait qu'on choisit pour le manchon un matériau dont le coefficient de dilatation thermique est égal ou supérieur au coefficient de dilatation thermique du matériau du tuyau.
